# EUROPEAN PATENT APPLICATION

(11) **EP 4 512 779 A1**
(43) Date of publication of application: **26.02.2025**
(21) Application number: 24196027.7
(22) Date of filing: 22.08.2024
(51) Int. Cl.: C01G 53/50, H01M 4/131, H01M 4/36, H01M 4/525

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 24.08.2023 KR 20230111551
(71) Applicant: SAMSUNG SDI CO., LTD., Giheung-gu Yongin-si, Gyeonggi-do 17084 (KR)
(72) Inventor: KANG, Byungwuk, 17084 Yongin-si (KR); DOO, Sungwook, 17084 Yongin-si (KR); KIM, Young-Ki, 17084 Yongin-si (KR); CHOO, Sung Ho, 17084 Yongin-si (KR); JUN, Dowook, 17084 Yongin-si (KR); KANG, Gwiwoon, 17084 Yongin-si (KR); JEONG, Jaeyong, 17084 Yongin-si (KR); KONG, Youngsun, 17084 Yongin-si (KR); KANG, Seok Mun, 17084 Yongin-si (KR); YOON, Jaesang, 17084 Yongin-si (KR)
(74) Representative: Marks & Clerk LLP

(57) **Abstract**

Disclosed are a positive electrode active material, a method of preparing the same, and a positive electrode and a rechargeable lithium battery including the same, the positive electrode active material including core particles including a layered lithium nickel-manganese-based composite oxide, a first coating layer on a surface of the core particles and containing Al, and a second coating layer on the first coating layer and containing Co.

## Description

### BACKGROUND

### 1. Field

Positive electrode active materials, preparation methods thereof, positive electrodes including the same, and rechargeable lithium batteries are disclosed.

### 2. Description of the Related Art

A portable information device such as, for example, a cell phone, a laptop, smart phone, and the like and/or an electric vehicle has used a rechargeable lithium battery having high energy density and easy portability as a driving power source. Recently, research has been actively conducted to use a rechargeable lithium battery having high energy density as a driving power source and/or power storage power source for hybrid and/or electric vehicles.

Various positive electrode active materials have been investigated to realize rechargeable lithium batteries for applications to the above-described uses. Among them, lithium nickel-based oxide, lithium nickel manganese cobalt composite oxide, lithium nickel cobalt aluminium composite oxide, and lithium cobalt oxide are mainly used as positive electrode active materials. However, while the demand for large-sized, high-capacity, and/or high-energy-density rechargeable lithium batteries has recently increased, the supply of a positive electrode active material containing cobalt, a rare metal, is expected to be severely short. For example, because cobalt is expensive and lacks remaining reserves, there is an interest in developing a positive electrode active material excluding cobalt or using it in a reduced amount.

### SUMMARY

Some embodiments of present disclosure provide a positive electrode active material, which includes lithium nickel-manganese-based composite oxide, thereby securing economic feasibility, high capacity, and long cycle-life characteristics and exhibiting improved high-voltage characteristics and high-temperature characteristics. Embodiments of the present disclosure provide a method of preparing the positive electrode active material, a positive electrode including the same, and a rechargeable lithium battery.

In some embodiments, a positive electrode active material includes core particles including a lithium nickel-manganese-based composite oxide, a first coating layer on the surface of the core particles and containing Al, and a second coating layer on the first coating layer and containing Co.

In some embodiments, a method of preparing a positive electrode active material includes mixing together a nickel-manganese-based composite hydroxide and a lithium raw material and performing a first heat treatment to obtain a lithium nickel-manganese-based composite oxide; adding an Al raw material and the lithium nickel-manganese-based composite oxide to an aqueous solvent, followed by mixing, and adding a Co raw material followed by mixing; and drying them and performing a second heat treatment.

In some embodiments, a positive electrode includes a positive electrode current collector and a positive electrode active material layer on the positive electrode current collector, wherein the positive electrode active material layer includes the aforementioned positive electrode active material.

In some embodiments, a rechargeable lithium battery includes the positive electrode, negative electrode, and an electrolyte.

At least some of the above and other features of the invention are set out in the claims.

The positive electrode active material according to some embodiments may maximize or increase capacity, while minimizing or reducing a production cost, to ensure long cycle-life characteristics and improve high-voltage characteristics and high-temperature characteristics. If the positive electrode active material is applied to a rechargeable lithium battery, high initial charge/discharge capacity and efficiency may be achieved under high-voltage operating conditions, long cycle-life characteristics may be realized, and an amount of gas generated due to the high-voltage and high-temperature operation may be effectively suppressed or reduced.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a cutaway perspective view illustrating a lithium rechargeable battery according to some embodiments.
FIG. 2 is a cross-sectional view illustrating a lithium rechargeable battery according to some embodiments.
FIGS. 3-4 are perspective views illustrating a lithium rechargeable battery according to some embodiments.
FIG. 5 is a scanning electron microscope (SEM) image of a cross section of the positive electrode active material of Example 1.
FIG. 6 is an image highlighting the Al element in FIG. 5 through scanning electron microscope-energy dispersive X-ray spectroscopy (SEM-EDS) analysis.
FIG. 7 is an image highlighting the Co element in FIG. 5 through SEM-EDS analysis.

### DETAILED DESCRIPTION

Hereinafter, example embodiments will be described in more detail so that those of ordinary skill in the art can easily implement them. However, the subject matter of this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., may be exaggerated for clarity and like reference numerals designate like elements throughout the specification. It will be understood that if an element such as a layer, film, region, or substrate is referred to as being "on" another element, it can be directly on the other element or intervening elements may also be present. In embodiments, if an element is referred to as being "directly on" another element, there are no intervening elements present.

In embodiments, "layer" herein includes not only a shape formed on the whole surface if viewed from a plan view, but also a shape formed on a partial surface.

The average particle diameter may be measured by any suitable method generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, if a definition is not otherwise provided, the average particle diameter means a diameter (D₅₀) of particles having a cumulative volume of 50 volume% in the particle size distribution that is obtained by measuring the size (diameter or length of the major axis) of about 20 particles at random in a scanning electron microscope image.

Herein, "or" is not to be construed as an exclusive meaning, for example, "A or B" is construed to include A, B, A+B, and/or the like.

As used herein, the term "metal" should be interpreted as a concept including ordinary metals, transition metals and metalloids (semi-metals).

### Positive Electrode Active Material

In some embodiments, a positive electrode active material includes core particles including a lithium nickel-manganese-based composite oxide, a first coating layer on the surface of the core particles and containing Al, and a second coating layer on the first coating layer and containing Co.

As the price of cobalt, a rare metal, has recently risen sharply, there is an interest in the development of positive electrode active materials that exclude cobalt or reduce its content. Among them, a positive electrode active material having an olivine crystal structure such as lithium iron phosphate (LFP), lithium manganese phosphate (LMP), lithium manganese iron phosphate (LMFP), and/or the like and/or a spinel crystal structure such as, for example, lithium manganese oxide (LMO) and/or the like has a limitation in realizing high capacity due to a small available lithium amount within the structure. The layered nickel-manganese positive electrode active material has excellent capacity and efficiency characteristics due to the high available lithium amount in the structure, making it suitable as a material for high-capacity batteries. However, as cobalt, which plays a key role in the layered structure, is removed, structural stability decreases, resistance (e.g., electrical resistance) increases, and it becomes difficult to secure long cycle-life characteristics. The layered nickel-manganese positive electrode active material, from which cobalt is excluded, may have a problem of an accelerated side reaction with an electrolyte under high-voltage and high-temperature conditions, resultantly increasing gas generation and deteriorating cycle-life characteristics.

In some embodiments, the first coating layer and the second coating layer are introduced on the surface of the core particle of the layered lithium nickel-manganese-based composite oxide, to propose a positive electrode active material that can maximize or increase capacity and efficiency and achieve long cycle-life characteristics by reducing gas generation even under high-voltage and/or high-temperature conditions.

### Core Particles

The core particles include lithium nickel-manganese-based composite oxide.

The nickel content may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium in the lithium nickel-manganese-based composite oxide. If the nickel content satisfies the above ranges, high capacity can be achieved and structural stability can be increased even if the cobalt content is reduced.

For example, a manganese content may be greater than or equal to about 10 mol%, for example, about 10 mol% to about 40 mol%, for example, about 15 mol% to about 40 mol%, about 15 mol% to about 35 mol%, about 15 mol% to about 30 mol%, or about 20 mol% to about 30% based on 100 mol% of a total metal excluding lithium in the lithium nickel-manganese-based composite oxide. If the manganese content satisfies the above ranges, the positive electrode active material may improve structural stability while realizing high capacity.

The lithium nickel-manganese-based composite oxide may be, for example, a lithium nickel-manganese-aluminium-based composite oxide that further includes aluminium in addition to nickel and manganese. If the composite oxide includes aluminium, it maintains a stable layered structure even if the cobalt element is excluded from the structure. The aluminium content based on 100 mol% of the lithium nickel-manganese-aluminium-based composite oxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 2.5 mol%. If the aluminium content satisfies the above ranges, a stable layered structure may be maintained even if cobalt is excluded, the problem of structure collapse due to charging and discharging may be suppressed or reduced, and long cycle-life characteristics of the positive electrode active material may be realized.

According to some embodiments, the concentration of aluminium within the core particle may be uniform (or substantially uniform). In embodiments, there is no concentration gradient of aluminium from the center to the surface within the core particle, or the aluminium concentration in the external portion of the core particle is neither higher nor lower than in the internal portion, and the aluminium within the core particle is evenly distributed. The foregoing may be a structure obtained by using aluminium raw materials during precursor production without additional doping of aluminium during the synthesis of the core particles and thereby synthesizing a composite oxide using nickel-manganese-aluminium-based hydroxide as a precursor. The core particle may be in the form of a secondary particle in which a plurality of primary particles are agglomerated, and the aluminium content inside the primary particle may be the same or similar regardless of the location of the primary particle. In embodiments, if a primary particle is selected at a random position in the cross section of a secondary particle and the aluminium content is measured inside the primary particle rather than at its interface, regardless of the location of the primary particle, for example, whether the primary particle is close to the center of the secondary particle or close to the surface, the aluminium content may be the same/similar/uniform. In embodiments of this structure, a stable layered structure can be maintained even if cobalt is absent or is present in a very small amount, and aluminium by-products and/or aluminium aggregates are not generated, so that the capacity, efficiency, and cycle-life characteristics of the positive electrode active material can be improved at the same time.

The lithium nickel-manganese-based composite oxide may be represented by Chemical Formula 1.

[Chemical Formula 1] Liₐ₁Niₓ₁Mn_{y1}Al_{z1}M¹_{w1}O_{2-b1}X_{b1}

In Chemical Formula 1, 0.9≤a1 ≤1.8, 0.6≤x1 ≤0.8, 0.1 ≤y1 ≤0.4, 0≤z1 ≤0.03, 0 ≤w1 ≤0.3, 0.9≤x1+y1+z1+w1 ≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.

In embodiments, in Chemical Formula 1, 0.9≤a1 ≤1.5, or 0.9≤a1 ≤1.2. In embodiments, Chemical Formula 1 may contain aluminium, and 0.6≤x1 ≤0.8, 0.1 ≤y1≤ 0.39, 0.01 ≤z1 ≤0.03, and 0≤w1 ≤0.29 may be satisfied, and, for example, 0.6≤x1 ≤0.8, 0.1 ≤y1 ≤0.39, 0.01<z1 ≤0.03, and 0≤w1 ≤0.29 may be satisfied.

In embodiments, in Chemical Formula 1, for example, 0.6≤x1 ≤0.79, 0.6≤x1 ≤0.78, 0.6≤x1 ≤0.75, 0.65≤x1 ≤0.8, or 0.7≤x1≤0.79; 0.1 ≤y1 ≤0.35, 0.1 ≤y1 ≤0.30, 0.1 ≤ y1 ≤0.29, 0.15≤y1 ≤0.39, or 0.2≤y1 ≤0.3; 0.01 ≤z1 ≤0.025, 0.01<z1 ≤0.02, or 0.01<z1≤ 0.019; and 0≤w1 ≤0.28, 0≤w1 ≤0.27, 0≤w1 ≤0.26, 0≤w1 ≤0.25, 0≤w1 ≤0.24, 0≤w1 ≤ 0.23, 0≤w1 ≤0.22, 0≤w1 ≤0.21, 0≤w1 ≤0.2, 0≤w1 ≤0.15, 0≤w1 ≤0.1, or 0≤w1 ≤0.09.

The lithium nickel-manganese-based composite oxide may be a cobalt-free compound that does not include cobalt or includes a very small amount of cobalt. For example, the lithium nickel-manganese-based composite oxide may have a cobalt content of about 0 mol% to about 0.01 mol% based on 100 mol% of a total metal of the lithium nickel-manganese-based composite oxide excluding lithium.

The core particles may be in the form of secondary particles formed by agglomerating a plurality of primary particles. The secondary particles may be spherical, elliptical, polyhedral, and/or irregular in shape, and the primary particles may be spherical, elliptical, plate-shaped, or a combination thereof.

The core particles are susceptible to chemical attack from components in the electrolyte if the battery is operated under high-voltage and/or high-temperature conditions, and many side reactions with the electrolyte may occur. In those instances, there is a problem that the battery cycle-life and safety are reduced due to the large amount of gas generated. These problems can be solved by introducing a coating layer according to some embodiments that will be further described below.

### First Coating Layer

The Al content in the first coating layer may be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the positive electrode active material. The foregoing refers only to the content of aluminium included in the first coating layer, separately from the aluminium included within the core particle. The aluminium content in the first coating layer can be measured, for example, through scanning electron microscope-energy dispersive X-ray spectroscopy (SEM-EDS) analysis of the surface and/or cross-section of the positive electrode active material. If the aluminium content in the first coating layer satisfies the above ranges, the first coating layer may have a uniform (or substantially uniform) and thin thickness, which may not increase resistance of the positive electrode active material and effectively suppress or reduce a side reaction with the electrolyte and thereby, improve cycle-life characteristics of a rechargeable lithium battery under high-voltage and high-temperature conditions. For example, if the aluminium content of the first coating layer is excessive, a uniform coating layer may not be formed and/or resistance (e.g., electrical resistance) may increase, which may reduce charge/discharge efficiency and cycle-life characteristics, and if the aluminium content of the first coating layer is too small, a coating layer of a suitable or appropriate thickness is not formed and an effect of suppressing or reducing side reactions with the electrolyte may be reduced.

The first coating layer may be in the form of a film that continuously (or substantially continuously) surrounds the surface of the core particle, for example, may be in the form of a shell that surrounds the entire surface of the core particle. This is distinct from a structure in which only portion of the surface of the core particle is partially coated. According to some embodiments, the first coating layer may be formed to entirely cover the surface of the core particle and may be formed to be very thin and uniform (or substantially uniform) in thickness, and therefore the positive electrode active material does not increase resistance (e.g., electrical resistance) or decrease capacity, improves structural stability, effectively suppresses or reduces side reactions with electrolytes, reduces the amount of gas generated under high-voltage and high-temperature conditions, and achieves long cycle-life characteristics.

A thickness of the first coating layer may be about 5 nm to about 40 nm, for example, about 5 nm to about 30 nm, or about 5 nm to about 20 nm. If the first coating layer satisfies the above thickness ranges, the structural stability of the positive electrode active material may be improved without increasing resistance (e.g., electrical resistance) or reducing capacity due to the coating, and the side reaction with the electrolyte may be effectively suppressed or reduced. The thickness of the first coating layer may be measured through, for example, scanning electron microscopy (SEM), transmission electron microscopy (TEM), time of flight-secondary ion mass spectroscopy (TOF-SIMS), X-ray photoelectron spectroscopy (XPS), and/or energy dispersive X-ray spectroscopy (EDS) analysis, and the thickness range of the first coating layer may be measured through TEM-EDS line profile.

The first coating layer may be thicker than the second coating layer further described below.

The first coating layer may be thin and uniform (or substantially uniform) in thickness, at a level of several to tens of nanometers. For example, the variation in first coating layer thickness within one positive electrode active material particle may be less than or equal to about 20%, less than or equal to about 18%, or less than or equal to about 15%. Herein, the deviation in first coating layer thickness refers to the first coating layer thickness within one positive electrode active material particle. For example, the deviation of the first coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the first coating layer thickness satisfies the above ranges means that a first coating layer of uniform (or substantially uniform) thickness is well formed in a form of a film on the surface of the positive electrode active material particle. Accordingly, the structural stability of the positive electrode active material is improved, side reactions with the electrolyte are effectively suppressed or reduced, and the increase in resistance or decrease in capacity due to coating can be minimized or reduced.

The first coating layer may include, for example, aluminium oxide, lithium-aluminium oxide, or a combination thereof. The first coating layer may have a layered structure. In embodiments, the compound included in the first coating layer may have a layered structure.

The first coating layer may further contain nickel, manganese, or a combination thereof in addition to aluminium.

### Second Coating Layer

The Co content in the second coating layer may be about 0.01 mol% to about 1 mol%, for example, about 0.01 mol% to about 0.9 mol%, about 0.01 mol% to about 0.7 mol%, about 0.05 mol% to about 0.5 mol%, or about 0.1 mol% to about 0.4 mol% based on 100 mol% of a total metal excluding lithium in the positive electrode active material. The Co content in the second coating layer can be measured, for example, through SEM-EDS analysis of the surface or cross-section of the positive electrode active material. If the Co content in the second coating layer satisfies the above ranges, the second coating layer may have a uniform (or substantially uniform) and thin thickness, which may not increase resistance (e.g., electrical resistance) of the positive electrode active material and effectively suppress or reduce a side reaction with the electrolyte and thereby, improve cycle-life characteristics of a rechargeable lithium battery under high-voltage and high-temperature conditions. For example, if the Co content of the second coating layer is excessive, a uniform coating layer may not be formed or resistance (e.g., electrical resistance) may increase, which may reduce charge/discharge efficiency and cycle-life characteristics, and if the Co content of the second coating layer is too small, a coating layer of a suitable or appropriate thickness is not formed and an effect of suppressing or reducing side reactions with the electrolyte may be reduced.

The second coating layer may be in the form of a film or shell that continuously (or substantially continuously) surrounds the surface of the first coating layer. According to some embodiments, because the second coating layer is formed to completely surround the outermost surface of the positive electrode active material but still has a very thin and uniform (or substantially uniform) thickness, the positive electrode active material may neither exhibit an increase in resistance (e.g., electrical resistance) nor deteriorate capacity but improve structural stability, effectively suppress or reduce a side reaction with an electrolyte, reduce a gas generation amount, and, realize long-term cycle-life characteristics.

A thickness of the second coating layer may be less than or equal to about 10 nm, for example, about 0.1 nm to about 10 nm, about 0.5 nm to about 9 nm, about 1 nm to about 7 nm, or about 1 nm to about 5 nm. If the second coating layer satisfies the thickness above ranges, the structural stability of the positive electrode active material may be improved without increasing resistance (e.g., electrical resistance) or reducing capacity due to the coating, and the side reaction with the electrolyte may be effectively suppressed or reduced. The thickness of the second coating layer may be measured through, for example, SEM, TEM, TOF-SIMS, XPS, and/or EDS analysis, and the thickness range of the second coating layer may be measured through TEM-EDS line profile.

The second coating layer according to some embodiments may be thin and uniform (or substantially uniform) in thickness, at a level of several to tens of nanometers. For example, the deviation in second coating layer thickness within one positive electrode active material particle may be less than or equal to about 20%, less than or equal to about 18%, or less than or equal to about 15%. Herein, the deviation in second coating layer thickness refers to the second coating layer thickness within one positive electrode active material particle. For example, the deviation of the second coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the second coating layer thickness satisfies the above ranges means that a second coating layer of uniform (or substantially uniform) thickness is well formed in the form of a film on the surface of the positive electrode active material particle. Accordingly, the structural stability of the positive electrode active material is improved, side reactions with the electrolyte are effectively suppressed or reduced, and the increase in resistance (e.g., electrical resistance) or decrease in capacity due to coating can be minimized or reduced.

The second coating layer may further include Al in addition to Co. The second coating layer may include, for example, cobalt oxide, lithium-cobalt oxide, aluminium-cobalt oxide, lithium-aluminium-cobalt oxide, or a combination thereof. The second coating layer may have a layered structure. The core, the first coating layer, and the second coating layer all having a layered crystal structure, meaning that intercalation and deintercalation of lithium may be further promoted.

In embodiments, the first coating layer may be thicker than the second coating layer. For example, a ratio of the thickness of the second coating layer to the thickness of the first coating layer may be less than or equal to about 0.5, for example, less than or equal to about 0.4, or less than or equal to about 0.3. If thicknesses of the first coating layer and the second coating layer satisfy the above relationships, the structural stability of the positive electrode active material may be improved without increasing resistance (e.g., electrical resistance) or decreasing capacity due to the coating; and high-voltage characteristics and high-temperature characteristics may be improved by effectively suppressing or reducing side reactions with the electrolyte.

The Al content of the first coating layer may be greater than the Co content of the second coating layer. Herein, the content may mean a molar content or a molar content relative to 100 mol% of a total metal excluding lithium in the positive electrode active material. For example, a ratio of the Co content of the second coating layer to the Al content of the first coating layer may be less than 0.5, for example, less than or equal to about 0.4, or less than or equal to about 0.3. If the Al content of the first coating layer and Co content of the second coating layer satisfy the above relationships, the structural stability of the positive electrode active material may be improved without increasing resistance (e.g., electrical resistance) or decreasing capacity due to the coating; and high-voltage characteristics and high-temperature characteristics may be improved by effectively suppressing or reducing side reactions with the electrolyte.

### Grain Boundary Coating Portion

In embodiments, during the first coating layer formation process, aluminium may diffuse into the core particles. Accordingly, the positive electrode active material according to some embodiments may further include a grain boundary coating portion including aluminium on the surface of the primary particles in the internal portion of the secondary particles. Herein, the secondary particle refers to the core particle, and the internal portion of the secondary particle may mean the entire internal portion excluding the surface of the secondary particle, or may be a region from the center of the secondary particle to the surface of the secondary particle, up to about 60 length% of the radius. The grain boundary coating is a concept that is distinct from the coating layer on the surface of the core particle, and refers to the coating portion formed on the surface of the primary particles inside the core particle. The presence of a grain boundary coating portion can be confirmed through SEM-EDS analysis of the cross-section of the positive electrode active material. By forming the aluminium grain boundary coating portion, the positive electrode active material can become more structurally stable and its cycle-life characteristics can be improved.

The aluminium content in the grain boundary coating portion is not particularly limited, and, for example, the aluminium content in the grain boundary coating portion may be less than the aluminium content in the coating layer.

In embodiments, the grain boundary coating portion may further include nickel, magnesium, yttrium, or a combination thereof in addition to aluminium.

The average particle diameter (D₅₀) of the positive electrode active material according to some embodiments is not particularly limited, but may be, for example, about 1 µm to about 25 µm, about 5 µm to about 20 µm, about 10 µm to about 20 µm, about 11 µm to about 18 µm, or about 12 µm to about 15 µm. As used herein, if a definition is not otherwise provided, the average particle diameter means a diameter (D₅₀) of particles having a cumulative volume of 50 volume% in the particle size distribution that is obtained by measuring the size (diameter or length of the major axis) of about 20 particles at random in a scanning electron microscope image for positive electrode active materials. If the average particle diameter of the positive electrode active material satisfies the above ranges, high capacity and long cycle-life can be realized and it can form a coating layer according to some embodiments.

The cobalt content in the positive electrode active material according to some embodiments may be, for example, less than or equal to about 0.01 mol%, less than or equal to about 0.005 mol%, or less than or equal to about 0.001 mol%, for example, about 0 mol% to about 0.01 mol% based on 100 mol% of a total metal excluding lithium. The positive electrode active material according to some embodiments may be, for example, a cobalt-free positive electrode active material (e.g., a positive electrode active material that is completely free of cobalt).

In some embodiments, a positive electrode active material may not include sodium. In embodiments, the positive electrode active material may be substantially free of sodium such that sodium is present in the positive electrode active material, if at all, only as an incidental impurity. In embodiments, the positive electrode active material may be completely free of sodium. Sodium ions can be used in the preparing process of a positive electrode active material, but according to the preparing method further described below, core particles having a stable structure and a coating layer of uniform (or substantially uniform) thickness can be formed without using sodium ions.

### Method of Preparing Positive Electrode Active Material

In some embodiments, a method of preparing a positive electrode active material includes mixing together a nickel-manganese-based composite hydroxide and a lithium raw material and performing a first heat treatment to obtain a lithium nickel-manganese-based composite oxide; adding Al raw material and the lithium nickel-manganese-based composite oxide to an aqueous solvent, followed by mixing and adding a Co raw material followed by mixing; and drying them and performing a second heat treatment. The aforementioned positive electrode active material may be manufactured through the method.

The layered nickel-manganese-based composite hydroxide as a precursor of core particles, may be in the form of secondary particles in which a plurality of primary particles are agglomerated, may not contain cobalt or may contain a very small amount of cobalt, for example, may be a cobalt-free nickel-manganese-based composite hydroxide. The nickel-manganese-based composite hydroxide (or nickel-manganese-aluminium-based composite hydroxide) may be prepared by a general co-precipitation method.

The nickel content in the nickel-manganese-based composite hydroxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal in the nickel-manganese-based composite hydroxide. If the nickel content satisfies the above ranges, high capacity can be achieved and structural stability can be increased even if the cobalt content is reduced.

The manganese content in the layered nickel-manganese-based composite hydroxide may be greater than or equal to about 10 mol%, for example, about 10 mol% to about 40 mol%, about 15 mol% to about 39 mol%, or about 15 mol% to about 35 mol%, about 15 mol% to about 30 mol%, or about 20 mol% to about 30%, etc. based on 100 mol% of a total metal in the layered nickel-manganese-based composite hydroxide.

In embodiments, if the nickel-manganese-based composite hydroxide further contains aluminium, the aluminium content may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of a total metal in the nickel-manganese-based composite hydroxide. If the manganese and aluminium contents of the composite hydroxide satisfy the above ranges, high capacity may be realized while structural stability of the positive electrode active material may be increased, and production price may be lowered to increase economic efficiency.

In a method for preparing a positive electrode active material according to some embodiments, in the preparation of core particles, aluminium is not additionally doped, but an aluminium raw material may be used to prepare a precursor, so that a nickel-manganese-aluminium-based composite hydroxide, in which aluminium is uniformly (or substantially uniformly) dispersed in the structure, may be used as the precursor. If such a precursor is used, the positive electrode active material may stably maintain a layered structure without cobalt despite repeated charges and discharges, and aluminium byproducts and/or aluminium aggregates may not be formed, improving capacity and efficiency characteristics and cycle-life characteristics of the positive electrode active material.

In the layered nickel-manganese-based composite hydroxide, the cobalt content may be less than or equal to about 0.01 mol%, less than or equal to about 0.005 mol%, or less than or equal to about 0.001 mol% based on 100 mol% of a total metal in the layered nickel-manganese-based composite hydroxide. This nickel-manganese-based composite hydroxide may be economical as it avoids or reduces the increase in unit cost caused by cobalt, maximizes or increases capacity, and improves structural stability.

As an example, the nickel-manganese-based composite hydroxide may be represented by Chemical Formula 2.

[Chemical Formula 2] Niₓ₂Mn_{y2}Al_{z2}M²_{w2}(OH)₂

In Chemical Formula 2, 0.6≤x2≤0.8, 0.1≤y2≤0.4, 0≤z2≤0.03, 0≤w2≤0.3, and 0.9≤x2+y2+z2+w2≤1.1, and M² is one or more elements selected from B, Ba, Ca, Ce, Cr, Fe, Mg, Mo, Nb, Si, Sn, Sr, Ti, V, W, Y, and Zr.

In Chemical Formula 2, for example, 0.6≤x2≤0.8, 0.1≤y2≤0.39, 0.01≤z2≤ 0.03, 0≤w2≤0.29.

The layered nickel-manganese-based composite hydroxide is in the form of particles, and the average particle diameter (D₅₀) of the particles may be about 1 µm to about 25 µm, about 5 µm to about 20 µm, about 10 µm to about 20 µm, about 11 µm to about 18 µm, or about 12 µm to about 15 µm.

The nickel-manganese-based composite hydroxide and the lithium raw material may be mixed together in a molar ratio of about 1:0.9 to about 1:1.8, for example, about 1:0.9 to about 1:1.5 or about 1:0.9 to about 1:1.2. The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours. Through the heat treatment, lithium nickel-manganese-based composite oxide may be obtained. The obtained composite oxide is substantially the same as that described for the core particles in the positive electrode active material part.

The layered lithium nickel-manganese-based composite oxide has a significantly different residual lithium content and different surface characteristics from an oxide of other compositions, for example, another nickel-based oxide such as a lithium nickel-cobalt-manganese-based composite oxide and/or a lithium nickel-cobalt-aluminium-based composite oxide, etc., meaning that existing coating methods may not succeed in forming a good coating layer thereon in the form of a uniform (or substantially uniform) film. In some embodiments, a method is applied to improve high-voltage characteristics by uniformly (or substantially uniformly) forming a coating layer having a very thin thickness on the surface of a layered lithium nickel-manganese-based composite oxide including a very small amount of cobalt and a nickel content of greater than or equal to about 60 mol%.

In some embodiments, Al raw material is added to an aqueous solvent and mixed together, then layered lithium nickel-manganese-based composite oxide is added and mixed together to induce a first coating layer on the surface of the layered lithium nickel-manganese-based composite oxide particles (core particles). Subsequently, Co raw material is added to the mixed solution and mixed together to induce a second coating layer. After removing the solvent from the mixed solution and drying it, a second heat treatment is performed to obtain a positive electrode active material in which an Al-containing first coating layer and a Co-containing second coating layer are sequentially formed on the surface of the core particle. This can be called a continuous wet coating method.

The aqueous solvent may include distilled water, an alcohol-based solvent, or a combination thereof. The Al raw material may include, for example, aluminium nitrate, aluminium sulfate, aluminium carbonate, aluminium hydroxide, or a combination thereof. For example, the Al raw material may include aluminium sulfate, and in this case, it is advantageous to form a first coating layer having a uniform (or substantially uniform) thickness on the surface of the lithium nickel-manganese-based composite oxide particles.

An Al content of the aluminium raw material may be designed to be about 0.1 mol% to about 2 mol%, for example, about 0.2 mol% to about 1.9 mol%, about 0.3 mol% to about 1.8 mol%, about 0.5 mol% to about 1.5 mol%, or about 0.8 mol% to about 1.3 mol% based on 100 mol% of a total metal excluding lithium in the positive electrode active material. If the Al coating content is designed to have the above ranges, the first coating layer may be formed to have a thin and uniform (or substantially uniform) thickness of several to tens nanometers, which may reduce an amount of gas generated by a rechargeable lithium battery under high-voltage and/or high-temperature operating conditions and improve high-capacity and long cycle-life characteristics.

A solution obtained by mixing together the aluminium raw materials in an aqueous solvent may have a pH of about 1.5 to about 3.5, for example, about 2.0 to about 3.4, about 2.5 to about 3.3, about 2.7 to about 3.3, or about 2.9 to about 3.2. Dropping and mixing together the lithium nickel-manganese-based composite oxide into an aqueous solvent mixed together with aluminium raw materials may proceed for about 5 minutes to about 80 minutes, about 5 minutes to about 60 minutes, or about 5 minutes to about 40 minutes. After the stirring, the mixed solution may have pH of about 4.5 to about 8.5, for example, about 5.0 to about 8.0, about 5.5 to about 7.5, or about 6.0 to about 7.0. If the above conditions are satisfied, it is beneficial to form a first coating layer having a uniform (or substantially uniform) thickness.

The Co raw material may include, for example, cobalt nitrate, cobalt sulfate, cobalt carbonate, cobalt hydroxide, or a combination thereof. The Co content of the Co raw material may be designed to be about 0.01 mol% to about 1 mol%, for example, about 0.01 mol% to about 0.9 mol%, about 0.01 mol% to about 0.7 mol%, about 0.05 mol% to about 0.5 mol%, or about 0.1 mol% to about 0.4 mol% based on 100 mol% of a total metal excluding lithium in the positive electrode active material. If the Co coating content is designed to have the above ranges, the second coating layer may be formed to have a thin and uniform (or substantially uniform) thickness of several to tens of nanometers, which may improve performance of the rechargeable lithium battery under high-voltage or high-temperature operating conditions and high-capacity and long cycle-life characteristics.

The adding and mixing of the Co raw material may be performed for about 5 minutes to about 80 minutes, about 5 minutes to about 60 minutes, or about 10 minutes to about 40 minutes. After the stirring, the mixed solution may have pH of about 4.5 to about 8.5, for example, about 5.0 to about 8.0, about 5.5 to about 7.5, or about 6.0 to about 7.0. If these conditions are satisfied, it is beneficial to form a second coating layer having a uniform (or substantially uniform) thickness.

The removing of the solvent and drying the mixed solution may be performed, for example at about 40 °C to about 240 °C, about 100 °C to about 220 °C, or about 150 °C to about 200 °C.

The second heat treatment may be performed in an oxygen atmosphere at a temperature range of about 700 °C to about 850 °C, about 750 °C to about 840 °C, or about 800 °C to about 830 °C for about 2 hours to about 20 hours, or about 3 to about 10 hours. In embodiments, the second heat treatment temperature may be lower than the first heat treatment temperature, and the second heat treatment time may be the same as or shorter than the first heat treatment time. A suitable or desired coating layer can be obtained by performing a second heat treatment under these conditions.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types (or kinds) of positive electrode active materials in addition to the positive electrode active materials described above. In embodiments, the positive electrode active material layer may optionally further include a binder, a conductive material (e.g., an electrically conductive material), or a combination thereof.

According to some embodiments, a loading level of the positive electrode active material layer may be about 10 mg/cm² to about 40 mg/cm², for example, about 10 mg/cm² to about 30 about mg/cm², or about 10 mg/cm² to about 20 mg/cm². In embodiments, a density of the positive electrode active material layer in the final compressed positive electrode may be about 3.3 g/cc to about 3.7 g/cc, for example, about 3.3 g/cc to about 3.6 g/cc, or about 3.4 g/cc to about 3.58 g/cc. If applying the positive electrode active material according to some embodiments, it is beneficial to implement such a loading level and positive electrode density, and a positive electrode that satisfies the loading level and positive electrode density in the above ranges is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

### Conductive Material

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

The binder and the conductive material may each be present in an amount of about 0.5 wt% to about 5 wt%, based on 100 wt% of the positive electrode active material layer.

The positive electrode current collector may include Al, but is not limited thereto.

### Rechargeable Lithium Battery

Some embodiments provide a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte.

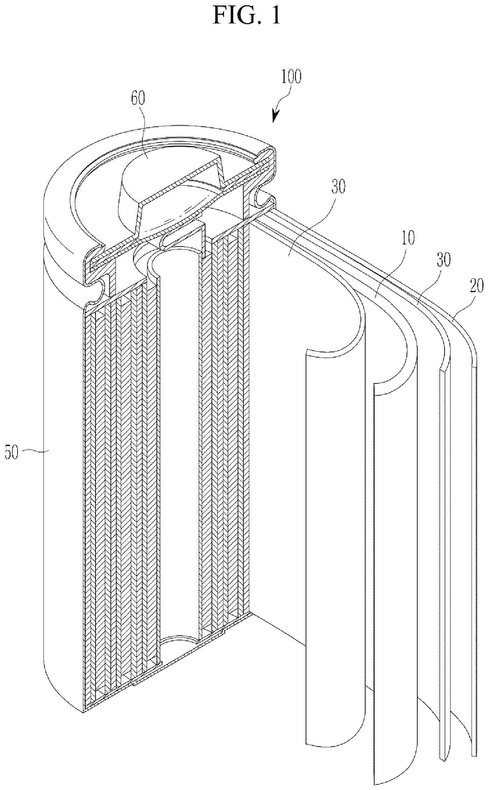

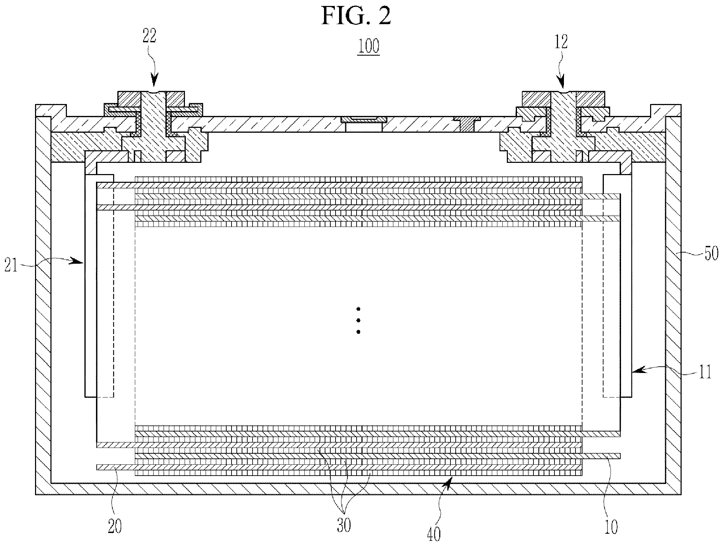

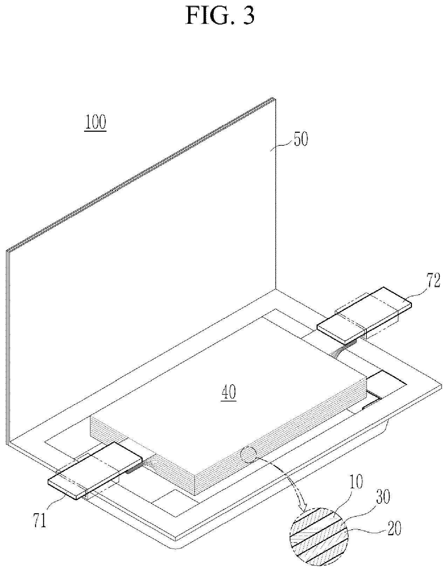

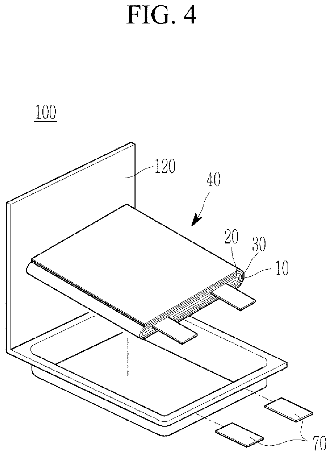

The rechargeable lithium battery may be classified into cylindrical, prismatic, pouch, coin, etc. depending on the shape. FIGS. 1-4 are schematic diagrams showing lithium rechargeable batteries according to some embodiments, where FIG. 1 is a circular battery, FIG. 2 is a square battery, and FIGS. 3-4 are each a pouch-shaped battery. Referring to FIGS. 1-4, a rechargeable lithium battery 100 includes an electrode assembly 40 including a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The lithium rechargeable battery 100 may include a sealing member 60 that seals the case 50 as shown in FIG. 1. In FIG. 2, the lithium rechargeable battery 100 may include a positive electrode lead tab 11, a positive electrode terminal 12, a negative lead tab 21, and a negative electrode terminal 22. As shown in FIGS. 3-4, the rechargeable lithium battery 100 includes an electrode tab 70 (FIG. 4), for example, a positive electrode tab 71 and a negative electrode tab 72 (FIG. 3) that serves as an electrical path for inducing the current formed in the electrode assembly 40 to the outside.

The rechargeable lithium battery according to some embodiments may be rechargeable at a high voltage, or may be suitable for being driven at a high voltage. For example, the charging voltage of the rechargeable lithium battery may be greater than or equal to about 4.45 V, about 4.45 V to about 4.7 V, about 4.45 V to about 4.6 V, or about 4.45 V to about 4.55 V. By applying the positive electrode active material according to some embodiments, the rechargeable lithium battery can significantly reduce an amount of gas generated even if charged at high voltage and can achieve high capacity and long cycle-life characteristics.

### Negative Electrode

The negative electrode may include a current collector and a negative electrode active material layer on the current collector, and may further include a negative electrode active material, a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

If the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In embodiments, if the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x<2). At this time, the atomic content ratio of Si:O, which indicates a degree of oxidation, may be about 99:1 to about 33:67. As used herein, if a definition is not otherwise provided, an average particle diameter (D₅₀) indicates a particle where a cumulative volume is about 50 volume% in a particle size distribution.

The Si-based negative electrode active material and/or Sn-based negative electrode active material may be mixed together with the carbon-based negative electrode active material. If the Si-based negative electrode active material and/or Sn-based negative electrode active material and the carbon-based negative electrode active material are mixed together and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If an aqueous binder is used as the negative electrode binder, a cellulose-based compound capable of imparting or increasing viscosity may be further included. As the cellulose-based compound, one or more selected from carboxymethyl cellulose, hydroxypropylmethyl cellulose, methyl cellulose, or alkali metal salts thereof may be mixed together and used. The alkali metal may be Na, K, and/or Li.

The dry binder may be a polymer material capable of becoming fiber (e.g., capable of being fiberized or fibrillized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, and/or foam. A thickness of the negative electrode current collector may be, for example, about 1 µm to about 20 µm, about 5 µm to about 15 µm , or about 7 µm to about 10 µm.

### Electrolyte

For example, the electrolyte for a rechargeable lithium battery may be an electrolyte, which may include a non-aqueous organic solvent and a lithium salt.

The non-aqueous organic solvent serves as a medium that transmits ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and/or the aprotic solvent may include nitriles such as R-CN (wherein R is a C2 to C20 linear, branched, or cyclic hydrocarbon group, a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds), and if two or more types (or kinds) are used in a mixture, a mixing ratio can be suitably or appropriately adjusted according to suitable or desired battery performance, which may be any suitable ones generally used in the art.

If using a carbonate-based solvent, a cyclic carbonate and a chain carbonate may be mixed together and used, and the cyclic carbonate and the chain carbonate may be mixed together in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed together and used in a volume ratio of about 1:1 to about 30:1.

The electrolyte may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within the above range, the electrolyte may have suitable or appropriate ionic conductivity and viscosity, and thus excellent performance can be achieved and lithium ions can move effectively.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from a polymer of polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and/or polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one selected from a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed together in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed together in a molar ratio of 1:1 and then, primarily heat-treated at 850 °C under an oxygen atmosphere for 8 hours to prepare composite oxide in the form of secondary particles having a composition of LiNi_{0.75}Mn_{0.23}Al_{0.02}O₂ and an average particle diameter (D₅₀) of about 14 µm.

After mixing aluminium sulfate together with a distilled water solvent, the composite oxide was added thereto and then, mixed together for 20 minutes to 60 minutes. Herein, an aluminium content in the aluminium sulfate was designed to be 1.0 mol% based on 100 mol% of a total metal excluding lithium in a positive electrode active material. Subsequently, cobalt sulfate was added thereto and then, stirred for about 10 minutes to 40 minutes. Herein, a cobalt content of the cobalt sulfate was designed to be 0.2 mol% based on 100 mol% of a total metal excluding lithium in a final positive electrode active material. After removing the solvent from the mixed solution, the resultant residue was dried at 190 °C and secondarily heat-treated at 825 °C under an oxygen atmosphere for 8 hours, thereby preparing the final positive electrode active material.

### 2. Manufacture of Rechargeable Lithium Battery Cell

98.5 wt% of the positive electrode active material, 1.0 wt% of a polyvinylidene fluoride binder, and 0.5 wt% of a carbon nanotube conductive material were mixed together to prepare a positive electrode active material layer slurry, and the slurry was coated on an aluminium foil current collector and then, dried and compressed to manufacture a positive electrode. At this time, a loading level of the positive electrode active material layer was 10 mg/cm², and the density of the final compressed positive electrode was about 3.4 g/cc.

97.5 wt% of a graphite negative electrode active material, 1.5 wt% of carboxymethyl cellulose, and 1 wt% of a styrene butadiene rubber in a water solvent were mixed together to prepare a negative electrode active material layer slurry. The negative electrode active material layer slurry was coated on a copper foil current collector and then, dried and compressed to manufacture a negative electrode.

A polytetrafluoroethylene separator was used, and an electrolyte prepared by dissolving 1 M LiPF₆ in a mixed solvent of ethylene carbonate and dimethyl carbonate in a volume ratio of 3:7 was used to manufacture a rechargeable lithium battery cell utilizing a general method.

### Comparative Example 1

A positive electrode active material and a rechargeable lithium battery cell were manufactured substantially in the same manner as in Example 1 except that the composite oxide of LiNi_{0.75}Mn_{0.23}Al_{0.02}O₂ itself without the Al and Co coating was used as the positive electrode active material.

### Comparative Example 2

A positive electrode active material and a rechargeable lithium battery cell were manufactured substantially in the same manner as in Example 1 except that the positive electrode active material was prepared by dry-coating Al alone without the Co coating.

The Al dry-coating method was performed as follows. The Al dry-coated with positive electrode active material was obtained by mixing together a composite oxide with a composition of LiNi_{0.75}Mn_{0.23}Al_{0.02}O₂ in the form of secondary particles with aluminium oxide powder and then, heat-treating the mixture at 825 °C for 8 hours under an oxygen atmosphere.

### Comparative Example 3

A positive electrode active material and a rechargeable lithium battery cell were manufactured substantially in the same manner as in Example 1 except that the positive electrode active material was prepared by wet-coating Al alone without the Co coating.

In other words, the positive electrode active material of Comparative Example 3 was prepared by mixing together aluminium sulfate in a distilled water solvent, adding composite oxide thereto and then, stirring the resultant mixture for 20 minutes to 60 minutes, removing the solvent therefrom, drying the residue at 190 °C, and secondarily heat-treating it under an oxygen atmosphere at 825 °C for 8 hours.

### Comparative Example 4

A positive electrode active material and a rechargeable lithium battery cell were manufactured substantially in the same manner as in Example 1 except that the positive electrode active material was prepared by wet-coating Co without the Al coating.

In other words, the positive electrode active material of Comparative Example 4 was prepared by mixing together cobalt sulfate in a distilled water solvent, adding composite oxide thereto and then, stirring the mixture for 20 minutes to 40 minutes, removing the solvent therefrom, drying the residue at 190 °C, and secondarily heat-treating it under an oxygen atmosphere at 825 °C for 8 hours.

### Evaluation Example 1: Analysis of Positive Electrode Active Material

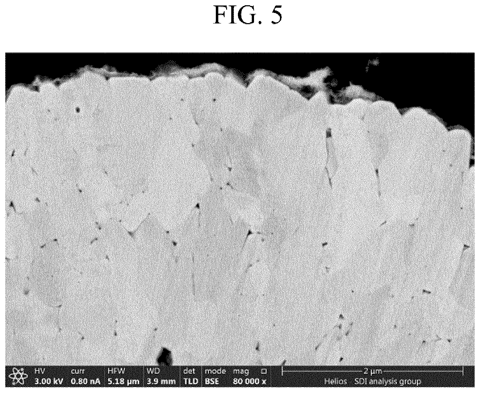

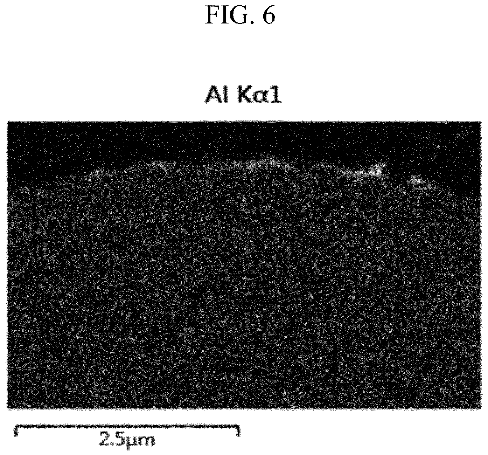

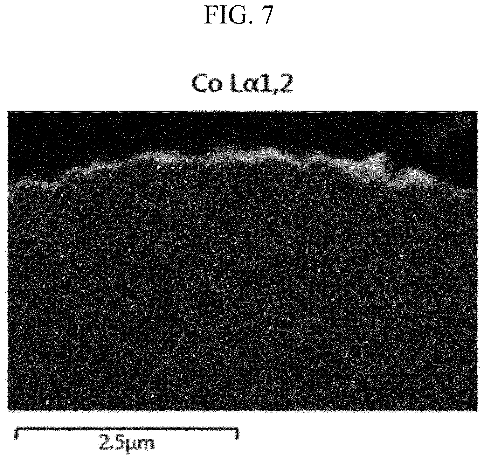

The positive electrode active material particles of Example 1 were cut by using a focused ion beam (FIB) to perform an SEM-EDS analysis on a cross-section thereof. FIG. 5 is an SEM image showing the cross section of the positive electrode active material of Example 1. FIG. 6 is an image highlighting the Al element in FIG. 5 through SEM-EDS analysis, and FIG. 7 is an image highlighting the Co element in FIG. 5 through SEM-EDS analysis. Referring to FIGS. 5-7, a first coating layer containing Al was formed to have a uniform thickness on the surface of the secondary particles, and on the first coating layer, a second coating layer containing Co was formed into a thin and uniform film to form an overall uniform double coating layer, which confirmed that a positive electrode active material having a double core-shell structure was prepared.

### Evaluation Example 2: Charge/discharge Characteristics and High-Temperature Cycle-life Characteristics

The rechargeable lithium battery cells according to Example 1 and Comparative Examples 1 to 4 were constant current-charged to 4.45 V at 0.2 C and constant voltage-charged to 0.05 C and then, discharged to a cut-off voltage of 3.0 V at 0.2 C at 25 °C as initial charge and discharge.

Subsequently, the cells were 25 times or more repeatedly charged at 1.0 C within a voltage range of 3.0 V to 4.45 V and discharged at 1.0 C at 45 °C to calculate a ratio of 25^{th} cycle discharge capacity to the initial discharge capacity, and the results are shown in Table 1.

**Table 1**

| | Core Ni:Mn:Al | Al coating | | Co coating | 4.45 V Initial discharge | High-temperature cycle-life |
|---|---|---|---|---|---|---|
| | | | | | capacity (mAh/g) | (%, @25cyc) |
| Example 1 | 75:23:2 | 1.0 mol% | wet | 0.2 mol% | 195.7 | 92.0 |
| Comparative Example 1 | 75:23:2 | - | - | - | 193.9 | 61.6 |
| Comparative Example 2 | 75:23:2 | 1.0 mol% | dry | - | 195.6 | 75.1 |
| Comparative Example 3 | 75:23:2 | 1.0 mol% | wet | - | 195.2 | 88.9 |
| Comparative Example 4 | 75:23:2 | - | - | 0.2 mol% | 194.4 | 90.7 |

Referring to Table 1, the rechargeable lithium battery cell of Example 1 exhibited much more excellent initial discharge capacity and cycle-life characteristics, compared with the cells of Comparative Examples 1 to 4.

While the subject matter of this disclosure has been described in connection with what is presently considered to be practical example embodiments, it is to be understood that the present disclosure is not limited to the disclosed embodiments. On the contrary, the present disclosure is intended to cover various modifications and equivalent arrangements included within the scope of the appended claims, and equivalents thereof.

Embodiments are set out in the following clauses:
Clause 1. A positive electrode active material, comprising:
   core particles comprising a lithium nickel-manganese-based composite oxide,
   a first coating layer on a surface of the core particles and containing Al, and
   a second coating layer on the first coating layer and containing Co.
Clause 2. The positive electrode active material of clause 1, wherein:
   in the layered lithium nickel-manganese-based composite oxide of the core particles, the nickel content is 60 mol% to 80 mol% and the manganese content is greater than or equal to 10 mol% based on 100 mol% of a total metal of the layered lithium nickel-manganese-based composite oxide excluding lithium.
Clause 3. The positive electrode active material of clause 1 or clause 2, wherein:
   the layered lithium nickel-manganese-based composite oxide of the core particles further comprises aluminium and the aluminium content of the core particles is 1 mol% to 3 mol% based on 100 mol% of a total metal of the layered lithium nickel-manganese-based composite oxide excluding lithium.
Clause 4. The positive electrode active material of any one of clauses 1 to 3, wherein:
   in the layered lithium nickel-manganese-based composite oxide of the core particles, the cobalt content is 0 mol% to 0.01 mol% based on 100 mol% of a total metal of the layered lithium nickel-manganese-based composite oxide excluding lithium.
Clause 5. The positive electrode active material of any one of clauses 1 to 4, wherein:
   the layered lithium nickel-manganese-based composite oxide of the core particles is represented by Chemical Formula 1:

      [Chemical Formula 1] Liₐ₁Niₓ₁Mn_{y1}Al_{z1}M¹_{w1}O_{2-b1}X_{b1}
   wherein in Chemical Formula 1, 0.9≤a1 ≤1.8, 0.6≤x1 ≤0.8, 0.1 ≤y1≤0.4, 0≤z1≤ 0.03, 0≤w1 ≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.
Clause 6. The positive electrode active material of any one of clauses 1 to 5, wherein:
   the first coating layer and the second coating layer are in a form of a continuous film.
Clause 7. The positive electrode active material of any one of clauses 1 to 6, wherein:
   a thickness of the first coating layer is 5 nm to 40 nm, and
   a thickness of the second coating layer is less than or equal to 10 nm.
Clause 8. The positive electrode active material of any one of clauses 1 to 7, wherein:
   a ratio of the thickness of the second coating layer to the thickness of the first coating layer is less than or equal to 0.5.
Clause 9. The positive electrode active material of any one of clauses 1 to 8, wherein:
   the Al content of the first coating layer is 0.1 mol% to 2 mol% based on 100 mol% of a total metal excluding lithium in the positive electrode active material,
   the Co content of the second coating layer is 0.01 mol% to 1 mol% based on 100 mol% of a total metal excluding lithium in the positive electrode active material.
Clause 10. The positive electrode active material of any one of clauses 1 to 8, wherein:
   the Al content of the first coating layer is 0.5 mol% to 1.5 mol% based on 100 mol% of a total metal excluding lithium in the positive electrode active material, and
   the Co content of the second coating layer is 0.05 mol% to 0.5 mol% based on 100 mol% of a total metal excluding lithium in the positive electrode active material.
Clause 11. The positive electrode active material of any one of clauses 1 to 10, wherein:
   a ratio of the Co content of the second coating layer to the Al content of the first coating layer is less than 0.5.
Clause 12. The positive electrode active material of any one of clauses 1 to 11, wherein:
   the first coating layer comprises aluminium oxide, lithium-aluminium oxide, or a combination thereof, and
   the second coating layer comprises cobalt oxide, lithium-cobalt oxide, aluminium-cobalt oxide, lithium-aluminium-cobalt oxide, or a combination thereof.
Clause 13. The positive electrode active material of any one of clauses 1 to 12, wherein:
   the first coating layer and the second coating layer have a layered structure.
Clause 14. The positive electrode active material of any one of clauses 1 to 13, wherein:
   the core particles are in a form of secondary particles formed by agglomerating a plurality of primary particles, and
   the positive electrode active material comprises a grain boundary coating portion containing Al on surfaces of the primary particles inside the secondary particles.
Clause 15. The positive electrode active material of clause 14, wherein:
   the Al content of the grain boundary coating portion is less than the Al content of the first coating layer.
Clause 16. The positive electrode active material of any one of clauses 1 to 15, wherein:
   an average particle diameter (D₅₀) of the positive electrode active material is 10 µm to 20 µm.
Clause 17. A method of preparing a positive electrode active material, comprising:
   mixing together a nickel-manganese-based composite hydroxide and a lithium raw material and performing a first heat treatment to obtain a lithium nickel-manganese-based composite oxide,
   adding an Al raw material to an aqueous solvent followed by mixing, adding the lithium nickel-manganese-based composite oxide followed by mixing, and adding a Co raw material followed by mixing, and
   drying them and performing a second heat treatment.
Clause 18. The method of clause 17, wherein:
   in the layered nickel-manganese composite hydroxide, a nickel content is 60 mol% to 80 mol%, a manganese content is greater than or equal to 10 mol%, an aluminium content is 0 mol% to 3 mol%, and a cobalt content is 0 mol% to 0.01 mol% based on 100 mol% of a total metal of the layered nickel-manganese composite hydroxide.
Clause 19. The method of clause 17 or clause 18, wherein:
   an Al content of the Al raw material is 0.1 mol% to 2 mol% based on 100 mol% of a total metal excluding lithium in the positive electrode active material, and
   a Co content of the Co raw material is 0.01 mol% to 1 mol% based on 100 mol% of a total metal excluding lithium in the positive electrode active material.
Clause 20. The method of any one of clauses 17 to 19, wherein:
   the Al raw material comprises aluminium nitrate, aluminium sulfate, aluminium carbonate, aluminium hydroxide, or a combination thereof, and
   the Co raw material comprises cobalt nitrate, cobalt sulfate, cobalt carbonate, cobalt hydroxide, or a combination thereof.
Clause 21. The method of any one of clauses 17 to 20, wherein:
   a solution obtained by mixing together the aluminium raw materials in an aqueous solvent has a pH of 1.5 to 3.5.
Clause 22. The method of any one of clauses 17 to 21, wherein:
   the first heat treatment is performed at 750 °C to 950 °C and
   the second heat treatment is performed at 700 °C to 850 °C.
Clause 23. A positive electrode, comprising:
   a positive electrode current collector, and
   a positive electrode active material layer on the positive electrode current collector,
   wherein the positive electrode active material layer includes the positive electrode active material of any one of clauses 1 to 16.
Clause 24. The positive electrode of clause 23, wherein:
   a loading level of the positive electrode active material layer is 10 mg/cm² to 40 mg/cm².
Clause 25. The positive electrode of clause 23 or clause 24, wherein:
   a density of the positive electrode active material layer is 3.3 g/cc to 3.7 g/cc.
Clause 26. A rechargeable lithium battery, comprising:
   the positive electrode of any one of clauses 23 to 25,
   a negative electrode, and
   an electrolyte.
Clause 27. The rechargeable lithium battery of clause 26, wherein: a charging voltage of the rechargeable lithium battery is greater than or equal to 4.45 V.

### <Description of Symbols>

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
core particles comprising a layered lithium nickel-manganese-based composite oxide,
a first coating layer on a surface of the core particles and containing Al, and
a second coating layer on the first coating layer and containing Co.

2. The positive electrode active material as claimed in claim 1, wherein:
(i) in the layered lithium nickel-manganese-based composite oxide of the core particles, the nickel content is 60 mol% to 80 mol% and the manganese content is greater than or equal to 10 mol% based on 100 mol% of a total metal of the layered lithium nickel-manganese-based composite oxide excluding lithium; and/or
(ii) the layered lithium nickel-manganese-based composite oxide of the core particles further comprises aluminium and the aluminium content of the core particles is 1 mol% to 3 mol% based on 100 mol% of a total metal of the layered lithium nickel-manganese-based composite oxide excluding lithium.

3. The positive electrode active material as claimed in claim 1 or claim 2, wherein:
in the layered lithium nickel-manganese-based composite oxide of the core particles, the cobalt content is 0 mol% to 0.01 mol% based on 100 mol% of a total metal of the layered lithium nickel-manganese-based composite oxide excluding lithium.

4. The positive electrode active material as claimed in any one of claims 1 to 3, wherein:
the layered lithium nickel-manganese-based composite oxide of the core particles is represented by Chemical Formula 1:
[Chemical Formula 1] Liₐ₁Niₓ₁Mn_{y1}Al_{z1}M¹_{w1}O_{2-b1}X_{b1}
wherein in Chemical Formula 1, 0.9≤a1 ≤1.8, 0.6≤x1 ≤0.8, 0.1≤y1≤0.4, 0≤z1≤ 0.03, 0≤w1 ≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.

5. The positive electrode active material as claimed in any one of claims 1 to 4, wherein:
(i) the first coating layer and the second coating layer are in a form of a continuous film; and/or
(ii) a thickness of the first coating layer is 5 nm to 40 nm, and
a thickness of the second coating layer is less than or equal to 10 nm.

6. The positive electrode active material as claimed in any one of claims 1 to 5, wherein:
a ratio of the thickness of the second coating layer to the thickness of the first coating layer is less than or equal to 0.5.

7. The positive electrode active material as claimed in any one of claims 1 to 6, wherein:
(i) the Al content of the first coating layer is 0.1 mol% to 2 mol% based on 100 mol% of a total metal excluding lithium in the positive electrode active material,
the Co content of the second coating layer is 0.01 mol% to 1 mol% based on 100 mol% of a total metal excluding lithium in the positive electrode active material; or
(ii) the Al content of the first coating layer is 0.5 mol% to 1.5 mol% based on 100 mol% of a total metal excluding lithium in the positive electrode active material, and
the Co content of the second coating layer is 0.05 mol% to 0.5 mol% based on 100 mol% of a total metal excluding lithium in the positive electrode active material.

8. The positive electrode active material as claimed in any one of claims 1 to 7, wherein:
(i) a ratio of the Co content of the second coating layer to the Al content of the first coating layer is less than 0.5; and/or
(ii) the first coating layer comprises aluminium oxide, lithium-aluminium oxide, or a combination thereof, and
the second coating layer comprises cobalt oxide, lithium-cobalt oxide, aluminium-cobalt oxide, lithium-aluminium-cobalt oxide, or a combination thereof; and/or
(iii) the first coating layer and the second coating layer have a layered structure.

9. The positive electrode active material as claimed in any one of claims 1 to 8, wherein:
(i) the core particles are in a form of secondary particles formed by agglomerating a plurality of primary particles, and
the positive electrode active material comprises a grain boundary coating portion containing Al on surfaces of the primary particles inside the secondary particles, optionally wherein:
the Al content of the grain boundary coating portion is less than the Al content of the first coating layer; and/or
(ii) an average particle diameter (D₅₀) of the positive electrode active material is 10 µm to 20 µm.

10. A method of preparing a positive electrode active material, comprising:
mixing together a layered nickel-manganese-based composite hydroxide and a lithium raw material and performing a first heat treatment to obtain a lithium nickel-manganese-based composite oxide,
adding an Al raw material to an aqueous solvent followed by mixing, adding the lithium nickel-manganese-based composite oxide followed by mixing, and adding a Co raw material followed by mixing, and
drying them and performing a second heat treatment.

11. The method as claimed in claim 10, wherein:
(i) in the layered nickel-manganese composite hydroxide, a nickel content is 60 mol% to 80 mol%, a manganese content is greater than or equal to 10 mol%, an aluminium content is 0 mol% to 3 mol%, and a cobalt content is 0 mol% to 0.01 mol% based on 100 mol% of a total metal of the layered nickel-manganese composite hydroxide; and/or
(ii) an Al content of the Al raw material is 0.1 mol% to 2 mol% based on 100 mol% of a total metal excluding lithium in the positive electrode active material, and
a Co content of the Co raw material is 0.01 mol% to 1 mol% based on 100 mol% of a total metal excluding lithium in the positive electrode active material.

12. The method as claimed in claim 10 or claim 11, wherein:
(i) the Al raw material comprises aluminium nitrate, aluminium sulfate, aluminium carbonate, aluminium hydroxide, or a combination thereof, and
the Co raw material comprises cobalt nitrate, cobalt sulfate, cobalt carbonate, cobalt hydroxide, or a combination thereof; and/or
(ii) a solution obtained by mixing together the aluminium raw materials in an aqueous solvent has a pH of 1.5 to 3.5; and/or
(iii) the first heat treatment is performed at 750 °C to 950 °C and
the second heat treatment is performed at 700 °C to 850 °C.

13. A positive electrode, comprising:
a positive electrode current collector, and
a positive electrode active material layer on the positive electrode current collector,
wherein the positive electrode active material layer includes the positive electrode active material as claimed in any one of claims 1 to 9.

14. The positive electrode as claimed in claim 13, wherein:
(i) a loading level of the positive electrode active material layer is 10 mg/cm² to 40 mg/cm²; and/or
(ii) a density of the positive electrode active material layer is 3.3 g/cc to 3.7 g/cc.

15. A rechargeable lithium battery, comprising:
the positive electrode as claimed in claim 13 or claim 14,
a negative electrode, and
an electrolyte, optionally wherein:
a charging voltage of the rechargeable lithium battery is greater than or equal to 4.45 V.
